# EUROPEAN PATENT APPLICATION

(11) **EP 0 616 414 A1**
(43) Date of publication of application: **21.09.1994**
(21) Application number: 93302013.3
(22) Date of filing: 17.03.1993
(51) Int. Cl.: H02M 7/48

(54) **Controllable compound voltage DC/AC transforming circuit**

(71) Applicant: Yang, Tai-Her, Si-Hu Town Dzan-Hwa (TW)
(72) Inventor: Yang, Tai-Her, Si-Hu Town Dzan-Hwa (TW)
(74) Representative: Arthur, Bryan Edward

(57) **Abstract**

The present invention relates to a controlable compound voltage high-efficiency DC/AC transforming circuit further in combination with linear or chop-wave solid switch unit to make solid compound voltage alternating, and in combination of step voltage with linear voltage adjustment or in combination of step voltage with chop-wave voltage adjustment for low ripple PWM voltage output and therefore to form adjustable linear or PWM control low ripple voltage rise or drop output between wave hollow voltage value and peak voltage value. Further in combination with solid bridge type switch circuit, it may obtain polarity exchange function and AC frequency control, and its compound voltage zero-point, peak value and bridge type switch are controlled by CCU to maintain synchronous relationship between the zero-point and direction exchange. The applications shall include for monophase or polyphase circuit.

## Description

### SUMMARY OF THE INVENTION

The present invention relates to a controlable compound voltage high-efficiency DC/AC transforming circuit further in combination with linear or chop-wave solid switch unit to make solid compound voltage alternating, and in combination of step voltage with linear voltage adjustment or in combination of step voltage with chop-wave voltage adjustment for low ripple PWM voltage output and therefore to form adjustable linear or PWM control low ripple voltage rise or drop output between wave hollow voltage value and peak voltage value. Further in combination with solid bridge type switch circuit, it may obtain polarity exchange function and AC frequency control, and its compound voltage zero-point, peak value and bridge type switch are controlled by CCU to maintain synchronous relationship between the zero-point and direction exchange. The applications shall include for monophase or polyphase circuit.

### BRIEF DESCRIPTION OF THE INVENTION

FIG. 1 is a block diagram showing the structure of bridge type alternating circuit for controllable compound voltage DC/AC transforming circuit.

FIG. 2 is a first embodiment of P₀ constructed from the circuit in FIG. 1.

FIG. 3 is a second embodiment of P₀ constructed from the circuit in FIG. 1.

FIG. 4 is a block diagram showing bridge type alternating circuit constructed from the present controllable compound voltage DC/AC transforming circuit having intermediate tap dual P₀.

FIG. 5 is an embodiment of output wave form from the present controllable compound voltage DC/AC transforming circuit.

### DETAILED DESCRIPTION OF THE INVENTION

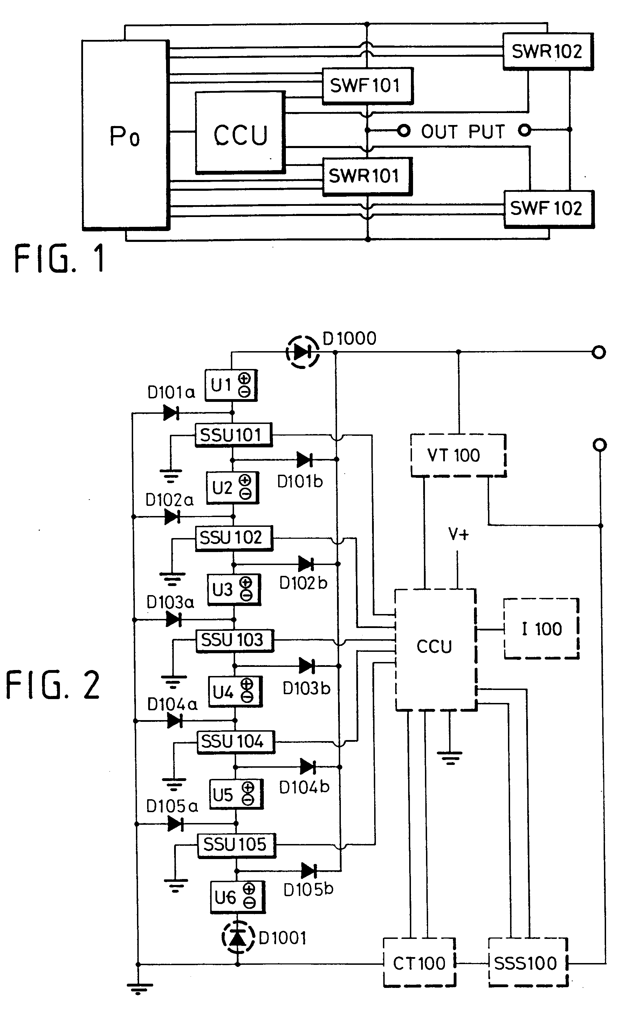

The present controllable compound voltage DC/AC transforming circuit relates to alternating compound voltage output constructed from a battery set and a solid switch unit series between the batteries, and further in combination with current detector, linear or switch type solid switch unit as well as in combination with a CCU for accepting orders from operating command input unit, and further to control solid switch set and regulate output voltage/current amount or regulate the output for constant voltage or current, or setting output limited value, and use WM for modulating solid switch unit to form a circuit taking low voltage as wave hollow and secondary high voltage as peak value for linear continuous adjustment of PWM to adjust output voltage whereby adjustable linear or PWM control low ripple voltage output is constructed between wave hollow voltave value to peak voltage value whereby a controllable compound voltage DC power supply unit is formed, and still further in combination with bridge type switch unit and the performance of AC approximate sine output according to the following control procedures. The present invention relates to controllable compound circuit in combination with conventional bridge type switch circuit to construct specific step compound voltage to form approximate sine AC output in place of the conventional type of voltage wave series by plural variators and interconnection transformer involved in high cost and low efficiency, and related structure and control include the embodiment constructed from bridge type switch circuit and step voltage synchronous control shown in FIG. 1, and main circuits comprise:
CCU consisted of microprocessor or sequence logic circuit and driving interface circuit for driving power unit to alternate solid switch unit, and solid switch units SWF101, SWF102, SWR101 and SWR102 of polarity alternating circuit to alternate in sequence;
polarity exchange circuit consisted of four thrysistors or transistors or electromechanical switch units SWF101, SWF102, SWR101, SWR102 bridge type connected together, and output end parallel connected to the load and necessary wave truing circuit (such as LC resonance truing circuit), and input end connected to the said battery set or compound voltage driving circuit P₀ of plural independent DC power supplies; bridge type switch is controlled by CCU, therefore when two switch units SWF101, SWF102 are ON, current passing by the load positively, when the other two switch units SWR101, SWR102 are ON, current passing by the load negatively to form a cycling function;
compound voltage supply unit P₀ consisted of two or more power units and solid switch units series therein between, and shunt diodes, when the CCU controlling the bridge type circuit for proceeding output pole cycling, each polar output also synchronously controlling the compound voltage supply unit P₀ to provide multi-step voltage of approximately necessary wave form, that is to say during polar output of each direction, its output wave form is changing low from zero, from low to high, from high to low and then to zero by means of compound voltage power supply, and then change the direction for repeating aforesaid voltage cycling to form approximate sine AC output from multi-step voltage.

During the operation of aforesaid system, it has following functions and features:
(1) It may provide most varieties of compound voltage output for selection by symmetrically alternating the switch units subject to the common divisor of general battery set plus switch fully-open and fully-closed.
(2) Circuit may have such output type of single unit and single phase or multi-unit and phase difference.

Besides, owing to the requirement of load, electric wave forms may include triangular wave, square wave, dent wave, integral wave, differential wave to meet a variety of purposes. We may use CCU to do direct control for DC pulse output of approximately necessary wave form against compound voltage output sequence, or synchronously matching polar exchange bridge type circuit for aforesaid specific wave form AC output.

Aforesaid compound voltage power supply unit P₀ may comprise common divider circuit shown in FIG. 2 wherein including:
two or more battery sets of same voltage and capacity or at least same voltage, including the type of primary or secondary battery or solar battery or fuel battery or thermal battery (or electrical unit constructed from AC power rectification separately each other), the solid switch unit located between each two battery units of battery set appearing positively polar series with battery set; aforesaid battery set including one or more series or parallel or series parallel battery; the positive pole of each switch unit is positively connected the diode to the positive output end; the negative pole of each switch unit (subject to the direction of output current) is positively connected the diode to the negative output end;
D1000 and D1001 of aforesaid circuit series between voltage units are diodes for equalizing purpose when battery sets parallel connected subject to the requirement;
the common divider output voltage value formed among aforesaid battery sets, each battery unit and diode, including:
(1) switch units fully opened, each battery unit appearing series voltage output;
(2) switch units fully closed, each battery unit appearing parallel voltage output;
(3) averaged distribution of respective series then parallel voltage output subject to common divider;
(4) averaged distribution of respective paralle then series voltage output subject to common divider;
Take FIG. 2 as instance, the system is consisted of six battery units U1 ^{∼} U6 and five switch units SSU101 ^{∼} SSU105 respectively located between each two battery units, and each switch unit has diodes D101a ^{∼} D105a which are located according to the aforesaid principle, and input ends parallel connected to negative output ends; output ends of D101b ^{∼} 105b parallel connected leading to positive output ends; when switch units SSU101 ^{∼} SSU105 closed, series voltage output from all battery units is 6 x EB (where EB is voltage of each battery unit), when switch unit SSU103 turned OFF while SSU101, SSU102, SSU104, SSU105 ON, output voltage is 3 x EB, i.e. battery units series connected three by three and then parallel connected each other; when switch units SSU102 and SSU104 turned OFF while SSU101, SSU103, SSU105 turned ON, output voltage is 2 x EB, i.e. battery unit series connected each two by two and then parallel connected one another; when SSU101 ^{∼} SSU105 all turned OFF, output voltage is EB, i.e. all battery units U1 ^{∼} U6 are parallel connected. If the system consisted of 24 voltage units, compound voltage gradient can be accomplished as such: 1 x EB, 2 x EB, 3 x EB, 4 x EB, 6 x EB, 8 x EB, 12 x EB, 24 x EB; if the system consisted of 36 voltage units, step compound voltage output formed by battery unit common divider as voltage multiples of battery unit can be accomplished as such: 1 x EB, 2 x EB, 3 x EB, 4 x EB, 6 x EB, 9 x EB, 12 x EB, 18 x EB, 36 x EB, and so forth; except for manual operation, aforesaid switch units can be controlled for compound voltage alternating by means of CCU and command input unit I100; or further carrying on linear or PWM type control against ON state linear or switch type solid units so as to adjust and control the solid switch operating state relatively to output value, including:
direct output microadjustment for step voltage by means of linear solid switch devices, then the adjustment for linear output voltage by means of driving current for linear solid switch devices controlled by CCU, or adjustment for PWM type loaded with step primary voltage by means of switch units.

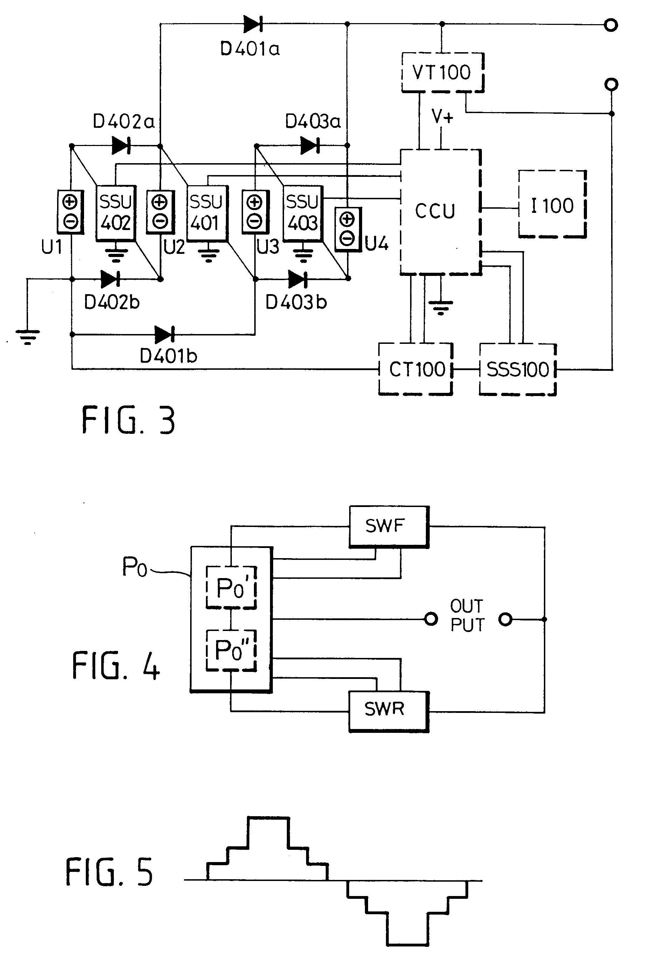

Another compound voltage power supply circuit of aforesaid circuit as shown in FIG. 3, comprises battery unit consisted of two or more battery sets of same voltage and capacity or at least same voltage to change their series and parallel states by means of dendritic connected switch units, and further to change output voltage, which is characterized in that, the connection of each switch unit and shunt diodes appear parallel and shunt while secondary step voltage division is provided by diodes to suppress voltage difference during connection units alternating, and further in combination with current detector and linear or switch type solid switch devices to form a CCU for accepting instructions from the command input unit to control solid switch units for adjusting output voltage or setting output limit value, as well as to form a circuit for PWM type adjustment of output voltage based on linear continuous adjustment subject to low voltage as wave hollow and secondary high voltage as peak value by means of linear adjustment or PWM modulating the solid switch devices, so as to form adjustable linear or PWM controlled low ripple voltage output between wave hollow voltage value to peak voltage value; the embodiment in FIG. 3 is based on the aforesaid principle and consisted of four battery units U1 ^{∼} U4 for dendritic alternating compound voltage output, comprising:
positive pole of battery unit U1 series with the switch unit SSU402 first and then positively series with bilateral shunt switch unit SSU202a then connecting the positive pole of battery unit U2 and series switch unit SSU201, then positively series with bilateral shunt switch SSU201a, and then connected to positive pole of output;
negative pole of battery unit U1 connected to the negative end of output and positively series with bilateral shunt switch unit SSU202b; output end of SSU202b connecting the negative end of switch SSU220, and then connected to the negative pole of battery unit U2;
negative ends of battery unit U1 series with bilateral shunt switch SSU201b, output ends of SSU201b connected to the negative ends of SSU201 and negative pole of battery U3, then positively series with bilateral shunt switch SSU203b; the output end of SSU203b connected to the negative end of series switch SSU203 and negative pole of battery unit U4;
positive pole of battery unit U3 communicated with series switch SSU203 and bilateral shunt switch SSU203a; positive output end of SSU203a communicated with the positive pole of battery unit U4 and connected to positive output end.

The operation of aforesaid circuits is characterized in that:
(1) when SSU201, SSU202, SSU203 all are not active, battery units U1 ^{∼} U4 all appear parallel low voltage output through switch connections, i.e. 1 x battery unit voltage;
(2) when SSU202, SSU203 are active, battery units U1 and U2, U3 and U4 are series and then parallel connected each other whereby output voltage is 2¹ x battery unit voltage;
(3) when SSU201, SSU202, SSU203 all are active, battery units U1 ^{∼} U4 are all series whereby output voltage is 2² x battery unit voltage; based on the embodiments of aforesaid circuits, it can be expanded subject to the common divider thereof.

Aforesaid circuit may be formed into a bridge type circuit consisted of plural series electrical elements with intermediate series taps and two switch devices (as FIG. 4), i.e. P₀ is constructed from compound voltage driving circuit series of two battery units or plural independent DC power supply, and intermediate series tap connected to the end of the load; aforesaid bridge type switch device may include two units, one unit SWF series with positive end of power supply unit and the other unit SWR series with negative end of power supply unit, and then both connected to the other end of the load whereby polarity alternating for the load voltage is accomplished through turning aforesaid two switch devices ON/OFF alternatively, and in cooperation with relative DC compound voltage power supply units appearing from low to high and then to low again during each half cycling to form approximately sine AC output. The embodiments of output wave form in FIGS. 1 and 4 are as shown in FIG. 5.

Output circuit may be further series with a current telemeter CT100 for measuring output current value that is to be fed back to CCU for controlling solid switch relatively subject to the command from input unit or CCU built-in setting value, and the output end may be paralled connected with a voltage telemeter VT100 for measuring output voltage value that is to be fed back to CCU for controlling solid switch relatively subject to the command from input unit or CCU built-in setting value, like the conventional steady circuit, such circuit is set up with a standard potential not only for regulating voltage fluctuation due to the load unsteadiness but for regulating load side voltage fluctuation due to unsteady voltage of power supply, such as unsteady voltage due to voltage drop of battery arising from the decrease of residual power.

Based on aforesaid statement, the present invention relates to provide a DC power supply with controllable output step compound voltage in company with synchronously controlled bridge type output circuit for constant or variable cycling AC approximate sine output, and further in combination with linear or wave-chop solid switch device, step linear or step load-wave type low ripple PWM voltage output, and further in combination with conventional bridge type switch devices to form a positive-negative polarity output interface whereby during each half cycling the circuit can accomplish cycling output from low to high and then reverting to low potential, so that approximately sine AC output is achieved through synchronous relationship between the both. Further with feedback limiting current or constant voltage or constant current output regulation. The design is new to provide definite function. Please examine it in accordance with the laws.

## Claims

1. A controlable compound voltage high-efficiency DC/AC transforming circuit further in combination with linear or chop-wave solid switch unit to make solid compound voltage alternating, and in combination of step voltage with linear voltage adjustment or in combination of step voltage with chop-wave voltage adjustment for low ripple PWM voltage output and therefore to form adjustable linear or PWM control low ripple voltage rise or drop output between wave hollow voltage value and peak voltage value. Further in combination with solid bridge type switch circuit, it may obtain polarity exchange function and AC frequency control, and its compound voltage zero-point, peak value and bridge type switch are controlled by CCU to maintain synchronous relationship between the zero-point and direction exchange, The applications shall include for monophase or polyphase circuit, the controllable compound voltage DC/AC transforming circuit relates to alternating compound voltage output constructed from a battery set and a solid switch unit series between the batteries, and further in combination with bridge type switch circuit and aforesaid step voltage synchronous control, comprising:
CCU consisted of microprocessor or sequence logic circuit and driving interface circuit for driving power unit to alternate solid switch unit, and solid switch units SWF101, SWF102, SWR101 and SWR102 of polarity alternating circuit to alternate in sequence;
polarity exchange circuit consisted of four thrysistors or transistors or electromechanical switch units SWF101, SWF102, SWR101, SWR102 bridge type connected together, and output end parallel connected to the load and necessary wave truing circuit (such as LC resonance truing circuit), and input end connected to the said battery set or compound voltage driving circuit P₀ of plural independent DC power supplies; bridge type switch is controlled by CCU, therefore when two switch units SWF101, SWF102 are ON, current passing by the load positively, when the other two switch units SWR101, SWR102 are ON, current passing by the load negatively to form a cycling function;
compound voltage supply unit P₀ consisted of two or more power units and solid switch units series therein between, and shunt diodes, when the CCU controlling the bridge type circuit for proceeding output pole cycling, each polar output also synchronously controlling the compound voltage supply unit P₀ to provide multi-step voltage of approximately necessary wave form, that is to say during polar output of each direction, its output wave form is changing low from zero, from low to high, from high to low and then to zero by means of compound voltage power supply, and then change the direction for repeating aforesaid voltage cycling to form approximate sine AC output from multi-step voltage.
During the operation of aforesaid system, it has following functions and features:
(1) It may provide most varieties of compound voltage output for selection by symmetrically alternating the switch units subject to the common divisor of general battery set plus switch fully-open and fully-closed.
(2) Circuit may have such output type of single unit and single phase or multi-unit and phase difference.
Besides, owing to the requirement of load, electric wave forms may include triangular wave, square wave, dent wave, integral wave, differential wave to meet a variety of purposes. We may use CCU to do direct control for DC pulse output of approximately necessary wave form against compound voltage output sequence, or synchronously matching polar exchange bridge type circuit for aforesaid specific wave form AC output.

2. The controllable compound voltage DC/AC transforming circuit according to claim 1 the common divider voltage circuit constructed from compound voltage power supply unit P₀, comprising:
two or more battery sets of same voltage and capacity or at least same voltage, including the type of primary or secondary battery or solar battery or fuel battery or thermal battery (or electrical unit constructed from AC power rectification separately each other), the solid switch unit located between each two battery units of battery set appearing positively polar series with battery set; aforesaid battery set including one or more series or parallel or series parallel battery; the positive pole of each switch unit is positively connected the diode to the positive output end; the negative pole of each switch unit (subject to the direction of output current) is positively connected the diode to the negative output end;
D1000 and D1001 of aforesaid circuit series between voltage units are diodes for equalizing purpose when battery sets parallel connected subject to the requirement;
the common divider output voltage value formed among aforesaid battery sets, each battery unit and diode, including:
(1) switch units fully opened, each battery unit appearing series voltage output;
(2) switch units fully closed, each battery unit appearing parallel voltage output;
(3) averaged distribution of respective series then parallel voltage output subject to common divider;
(4) averaged distribution of respective paralle then series voltage output subject to common divider.

3. The controllable compound voltage DC/AC transforming circuit according to claim 1, except for manual operation, aforesaid switch units can be controlled for compound voltage alternating by means of CCU and command input unit I100; or further carrying on linear or PWM type control against ON state linear or switch type solid units so as to adjust and control the solid switch operating state relatively to output value, including:
direct output microadjustment for step voltage by means of linear solid switch devices, then the adjustment for linear output voltage by means of driving current for linear solid switch devices controlled by CCU, or adjustment for PWM type loaded with step primary voltage by means of switch units.

4. The controllable compound voltage DC/AC transforming circuit according to claim 1, further including battery unit consisted of two or more battery sets of same voltage and capacity or at least same voltage to change their series and parallel states by means of dendritic connected switch units, and further to change output voltage, which is characterized in that, the connection of each switch unit and shunt diodes appear parallel and shunt while secondary step voltage division is provided by diodes to suppress voltage difference during connection units alternating, and further in combination with current detector and linear or switch type solid switch devices to form a CCU for accepting instructions from the command input unit to control solid switch units for adjusting output voltage or setting output limit value, as well as to form a circuit for PWM type adjustment of output voltage based on linear continuous adjustment subject to low voltage as wave hollow and secondary high voltage as peak value by means of linear adjustment or PWM modulating the solid switch devices, so as to form adjustable linear or PWM controlled low ripple voltage output between wave hollow voltage value to peak voltage value; the embodiment in FIG. 3 is based on the aforesaid principle and consisted of four battery units U1 ^{∼} U4 for dendritic alternating compound voltage output, comprising:
positive pole of battery unit U1 series with the switch unit SSU402 first and then positively series with bilateral shunt switch unit SSU202a then connecting the positive pole of battery unit U2 and series switch unit SSU201, then positively series with bilateral shunt switch SSU201a, and then connected to positive pole of output;
negative pole of battery unit U1 connected to the negative end of output and positively series with bilateral shunt switch unit SSU202b; output end of SSU202b connecting the negative end of switch SSU220, and then connected to the negative pole of battery unit U2;
negative ends of battery unit U1 series with bilateral shunt switch SSU201b, output ends of SSU201b connected to the negative ends of SSU201 and negative pole of battery U3, then positively series with bilateral shunt switch SSU203b; the output end of SSU203b connected to the negative end of series switch SSU203 and negative pole of battery unit U4;
positive pole of battery unit U3 communicated with series switch SSU203 and bilateral shunt switch SSU203a; positive output end of SSU203a communicated with the positive pole of battery unit U4 and connected to positive output end.
The operation of aforesaid circuits is characterized in that:
(1) when SSU201, SSU202, SSU203 all are not active, battery units U1 ^{∼} U4 all appear parallel low voltage output through switch connections, i.e. 1 x battery unit voltage;
(2) when SSU202, SSU203 are active, battery units U1 and U2, U3 and U4 are series and then parallel connected each other whereby output voltage is 2¹ x battery unit voltage;
(3) when SSU201, SSU202, SSU203 all are active, battery units U1 ^{∼} U4 are all series whereby output voltage is 2² x battery unit voltage; based on the embodiments of aforesaid circuits, it can be expanded subject to the common divider thereof.

5. The controllable compound voltage DC/AC transforming circuit according to claim 1, further including a bridge type circuit consisted of plural series electrical elements with intermediate series taps and two switch devices (as FIG. 4), i.e. P₀ is constructed from compound voltage driving circuit series of two battery units or plural independent DC power supply, and intermediate series tap connected to the end of the load; aforesaid bridge type switch device may include two units, one unit SWF series with positive end of power supply unit and the other unit SWR series with negative end of power supply unit, and then both connected to the other end of the load whereby polarity alternating for the load voltage is accomplished through turning aforesaid two switch devices ON/OFF alternatively, and in cooperation with relative DC compound voltage power supply units appearing from low to high and then to low again during each half cycling to form approximately sine AC output.
